# EUROPEAN PATENT APPLICATION

(11) **EP 4 840 532 A1**
(43) Date of publication of application: **18.11.2026**
(21) Application number: 25177012.9
(22) Date of filing: 16.05.2025
(51) Int. Cl.: B01D 63/04

(54) **MODULAR MEMBRANE HOLDER**

(71) Applicant: JB Ventures B.V., 7442 CL Nijverdal (NL)
(72) Inventor: Berends, Hendrik Johan Ferdinand, 7481 CJ Haaksbergen (NL)
(74) Representative: 't Jong, Bastiaan Jacob

(57) **Abstract**

The invention relates to a modular membrane holder for hollow fiber membranes, in particular for application in a tube filter, which membrane holder comprises a number of membrane holder modules arranged coaxial on a main axis and which number of membrane holder modules is successively interconnected, wherein each membrane holder module comprises:
- a prismatic hollow section having a longitudinal axis coaxial with the main axis of the modular membrane holder;
- connecting means having a male connecting part arranged on a first longitudinal end of the prismatic hollow section and a female connecting part arranged on a second longitudinal end of the prismatic hollow section;
- a number of elongate separators for separating bundles of hollow fiber elements, which elongate separators are arranged with a first end on the outer wall of the prismatic hollow section extending in radial direction

wherein each elongate separator comprises a first channel having an elongate bottom wall, a first upstanding wall arranged along a first elongate edge of the bottom wall and a second upstanding wall arranged along a second elongate edge of the bottom wall, wherein both the first and second upstanding wall extend substantially parallel to the radial plane of the prismatic hollow section; and
wherein for each elongate separator at least one opening is provided in the prismatic hollow section, which at least one opening debouches into the first channel.

## Description

The invention relates to a modular membrane holder for hollow fiber membranes, in particular for application in a tube filter, which membrane holder comprises a number of membrane holder modules arranged coaxial on a main axis and which number of membrane holder modules is successively interconnected, wherein each membrane holder module comprises:
- a prismatic hollow section having a longitudinal axis coaxial with the main axis of the modular membrane holder;
- connecting means having a male connecting part arranged on a first longitudinal end of the prismatic hollow section and a female connecting part arranged on a second longitudinal end of the prismatic hollow section;
- a number of elongate separators for separating bundles of hollow fiber elements, which elongate separators are arranged with a first end on the outer wall of the prismatic hollow section extending in radial direction.

Such a modular membrane holder is for example known from EP 4088809. In this publication the membrane holder modules with the elongate separators are alternately connected with tube-like modules, which are provided with openings to allow permeate to enter the central channel formed by these tube-like modules and the membrane holder modules. A disadvantage of such a modular membrane holder is that the membranes are only supported at spaced apart positions corresponding with the membrane holder modules, while the membranes are unsupported at the position of the tube-like elements. This could cause a shorter lifetime of the membranes compared to when the membranes would be supported fully.

It is also known, from for example US 6203699, to compose a membrane holder out of an extruded tube, which is provided with longitudinal groves, in which plate elements can be mounted to form separators. The extruded tube is cut to the desired length and openings need to be punched at the bottom of the grooves, such that permeate can flow through said openings. One or more plate elements can be arranged in one groove such that the formed separator extends over the full length of the extruded tube. However, if the length of the tube does not correspond to a multiple of the length of the plate elements, one plate element needs to be cut at the desired length. Such a membrane holder is costly to manufacture.

It is an object of the invention to reduce or even remove the above mentioned disadvantages.

This object is achieved according to the invention with a modular membrane holder according to the preamble, which is characterized in that each elongate separator comprises a first channel having an elongate bottom wall, a first upstanding wall arranged along a first elongate edge of the bottom wall and a second upstanding wall arranged along a second elongate edge of the bottom wall, wherein both the first and second upstanding wall extend substantially parallel to the radial plane of the prismatic hollow section; and
wherein for each elongate separator at least one opening is provided in the prismatic hollow section, which at least one opening debouches into the first channel.

With the modular membrane holder according to the invention, the membrane holder modules are both provided with separators and openings for permeate to flow to the inside of the prismatic hollow section. The wall parts of the first channel of each separator provide more support than when tube-like modules are alternately arranged between the membrane holder modules.

The first channels having a bottom wall and first and second upstanding walls ensures that the flow to and from the openings in the prismatic hollow section is guided, such that the membranes cannot be damages, in particular during a backwash of the membranes.

In a preferred embodiment of the modular membrane holder according to the invention, each elongate separator comprises a second channel having an elongate bottom wall, a first upstanding wall arranged along a first elongate edge of the bottom wall and a second upstanding wall arranged along a second elongate edge of the bottom wall, wherein both the first and second upstanding wall extend substantially parallel to the radial plane of the prismatic hollow section;
wherein the bottom wall of the second channel is arranged against the bottom wall of the first channel; and
wherein for each elongate separator at least one opening is provided in the prismatic hollow section, which at least one opening debouches into the second channel.

Having two channels provided in the separator ensures that the flow from either side of the separator, when viewed in axial direction, can be made equal, such that the membranes on either side of the separator perform equally. Furthermore, the support of the membranes on either side of the separator is also equal as either side is provided with a first upstanding wall and a second upstanding wall.

In another preferred embodiment of the modular membrane holder according to the invention, for each separator the height of the first upstanding wall, or the combined height of the first upstanding walls, along the length of said wall(s) corresponds to the length of the prismatic hollow section, and wherein the height of the second upstanding wall, or the combined height of the second upstanding walls, along a first section beginning at the first end of the separator corresponds to the length of the prismatic hollow section and along a second section is smaller than the length of the prismatic hollow section.

As a result, a wall will be formed by the first upstanding walls, which is closed over the full length of the modular membrane holder. This will ensure a full support of the membranes held by the modular membrane holder according to the invention.

As the second upstanding wall parts have along a second section a smaller width than the length of the prismatic hollow section, this provides openings for the flow along the openings in the prismatic hollow sections. The full width over the first section is to ensure that during backwash fluid from the openings in the prismatic hollow sections is directed radially and does not damage the membranes.

In yet another embodiment of the modular membrane holder according to the invention each membrane holder module is connected directly to an adjacent membrane holder module.

In still a further embodiment of the modular membrane holder according to the invention the outer dimensions of the male connecting part of the connecting means corresponds to the inner dimensions of the female connecting part.

This provides a tight fit, which allows for the membrane holder modules to be glued together or to be welded for example by ultrasonic welding or by friction welding. This also ensures that the formed central tube is, apart from the provided openings for permeate, fully closed and no unintended leakages could occur.

It is also possible to provide a snap connection to snap adjacent modules together or to provide a thread, such that modules can be screwed together.

In another embodiment of the modular membrane holder according to the invention each membrane holder module comprises a number of elongate bridging parts each extending between and detachably mounted to the distal ends of two adjacent separators.

The bridging parts keep a bundle of membranes together between the separators, which allows for easy assembly of a tube filter, in which a membrane holder according to the invention with bundles of membranes is mounted.

Yet another embodiment of the invention according to the invention further comprises an inlet module connected to the connecting means of the first of the successively interconnected membrane holder modules, and an outlet module connected to the connecting means of the last of the successively interconnected membrane holder modules.

These and other features of the invention will be elucidated in conjunction with the accompanying drawings.
Figure 1 shows a perspective view of a first embodiment of the modular membrane holder according to the invention, partially cut-way at the back of the view.
Figure 2 shows a perspective view of a membrane holder module of the modular membrane holder according to figure 1.
Figure 2A shows a cross-sectional detail of figure 2.
Figure 3 shows a perspective view of a second embodiment of the membrane holder according to the invention.

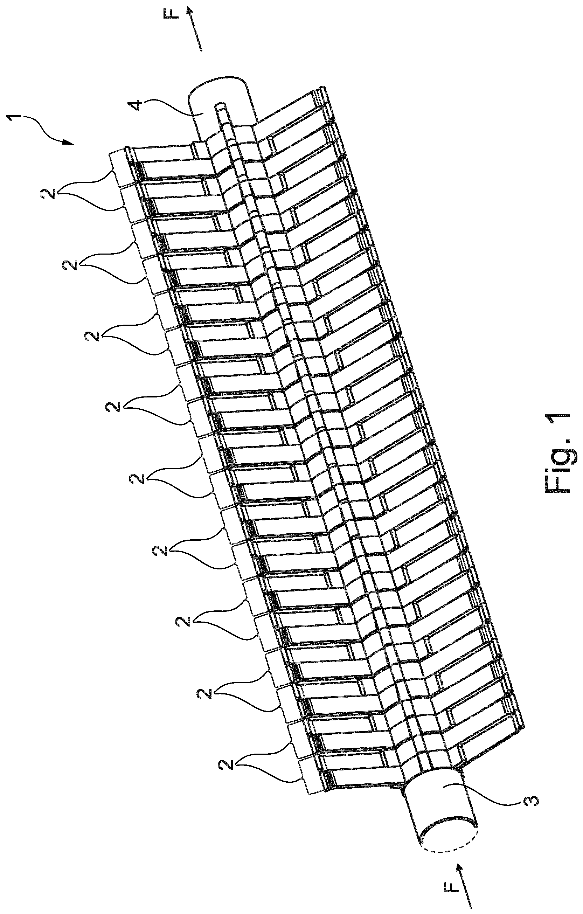

Figure 1 shows a perspective view of a first embodiment of the modular membrane holder 1 according to the invention, partially cut-way at the back of the view. The modular membrane holder 1 has a number of successively interconnected membrane holder modules 2, an inlet module 3 connected to the first of the successively interconnected membrane holder modules 2, and an outlet module 4 connected to the last of the successively interconnected membrane holder modules 2.

The inlet module 3, successively interconnected membrane holder modules 2 and the outlet module 4 form a tube along which a flow of fluid F can be transported, either to discharge permeate from the membranes held by the modular membrane holder 1 or to feed the fluid to the membranes for a backwash.

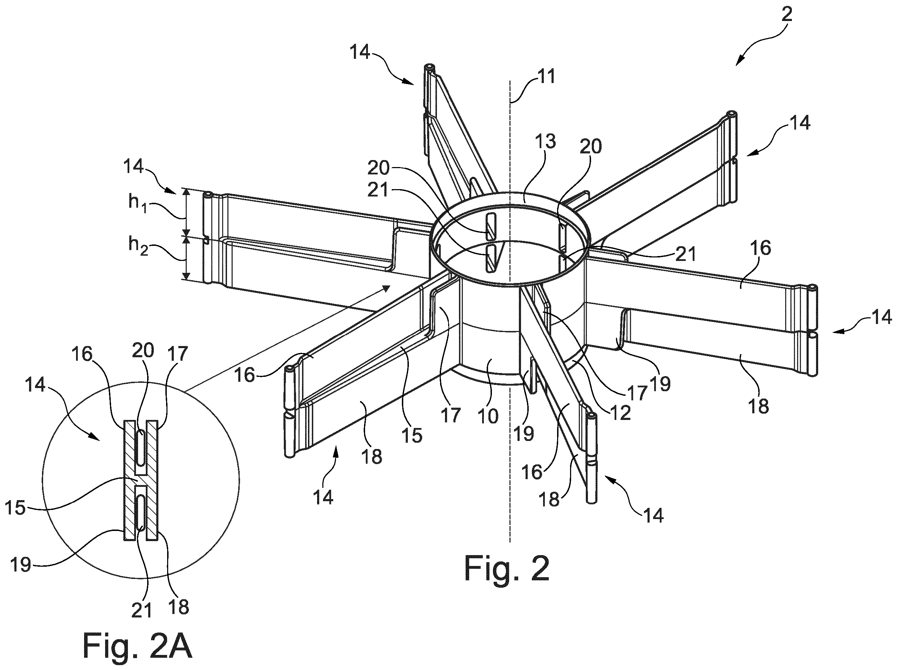

Figure 2 shows a perspective view of a membrane holder module 2 of the modular membrane holder 1 of figure 1. The membrane holder module 2 has a prismatic hollow section 10, which is in this embodiment cylindrical. The prismatic hollow section 10 has a longitudinal axis 11.

The prismatic hollow section 10 has at a firs longitudinal end a male connecting part 12 and at a second longitudinal end a female connecting part 13. This allows for two membrane holder modules 2 to be connected by inserting the male connecting part 12 of one membrane holder module 2 into the female connecting part 13 of a second membrane holder module 2.

In radial planes extending elongate separators 14 for separating bundles of hollow fiber elements are arranged with a first end on the outer wall of the prismatic hollow section 10.

Each separator 14 has in this embodiment a first channel 15, 16, 17 and a second channel 15, 18, 19. The first channel 15, 16, 17 has a bottom wall 15, a first upstanding wall 16 and a second upstanding wall 17. The second channel 15, 18, 19 shares the same bottom wall 15 and also has a first upstanding wall 18 and a second upstanding wall 19. (See also figure 2A).

Both first upstanding walls 16 and 18 extend to the end of the separator 14, while the second upstanding walls 17 and 19 only extend from the prismatic hollow section 10 over a first section.

The combined height h₁ and h₂ of the first wall 16 of the first channel and the first wall 18 of the second channel equals the length of the prismatic hollow section 10, such that a plate-like separator element is formed over the full length of the modular membrane holder 1, as can be seen in figure 1.

Openings 20, 21 are arranged in the wall of the prismatic hollow section 10 and debouch into respectively the first channel 15, 16, 17 and the second channel 15, 18, 19 of each separator 14.

With the second upstanding walls 17, 19 extending from the prismatic hollow section 10 over a first section, an opening is formed along which fluid can flow to or from the openings 20, 21. The second upstanding walls 17, 19 in particular guide the flow of fluid in a radial direction when the fluid is pumped from the central tube through the openings into the space between the separators 14. This prevents the membranes held in this space to be damaged during a backwash.

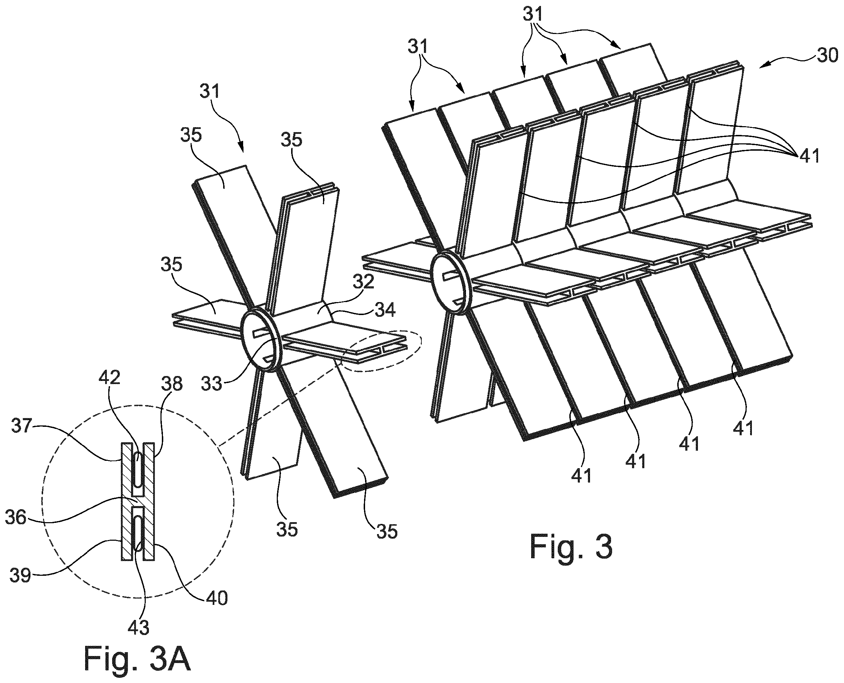

Figure 3 shows a second embodiment of the modular membrane holder 30 according to the invention. The embodiment 30 corresponds largely with the first embodiment 1 shown in figures 1 and 2.

The modular membrane holder 30 is composed out of membrane holder modules 31, which are interconnected successively.

Each membrane holder module 31 has a prismatic a prismatic hollow section 32, which is in this embodiment cylindrical. The prismatic hollow section 32 has at a firs longitudinal end a male connecting part 33 and at a second longitudinal end a female connecting part 34. This allows for two membrane holder modules 31 to be connected by inserting the male connecting part 33 of one membrane holder module 31 into the female connecting part 34 of a second membrane holder module 31.

In radial planes extending elongate separators 35 for separating bundles of hollow fiber elements are arranged with a first end on the outer wall of the prismatic hollow section 32.

Each separator 35 has in this embodiment a first channel 36, 37, 38 and a second channel 36, 39, 40. The first channel 36, 37, 38 has a bottom wall 36, a first upstanding wall 37 and a second upstanding wall 38. The second channel 36, 39, 40 shares the same bottom wall 36 and also has a first upstanding wall 39 and a second upstanding wall 4-. (See also figure 3A).

All upstanding walls 37, 38, 39, 40 extend to the end of the separator 35. As the combined width of the upstanding first walls 37, 39 and the combined width of the upstanding second walls 38, 40 is smaller than the length of the prismatic hollow section 32, slits 41 are formed between adjacent membrane holder modules 31.

These slits 41 allows for permeate to flow into the first channel 36, 37, 38 or second channel 36, 39, 40, through the holes 42, 43 which are arranged in the wall of the prismatic hollow section 32.

In a backwash situation the fluid flow from these openings 42, 43 will be directed by the first channel 36, 37, 38 or second channel 36, 39, 40 towards the end of the separator 35, where the fluid will contact a contact housing first, before it flows towards the membranes. This will protect the membranes in a backwash situation.

## Claims

1. Modular membrane holder for hollow fiber membranes, in particular for application in a tube filter, which membrane holder comprises a number of membrane holder modules arranged coaxial on a main axis and which number of membrane holder modules is successively interconnected, wherein each membrane holder module comprises:
- a prismatic hollow section having a longitudinal axis coaxial with the main axis of the modular membrane holder;
- connecting means having a male connecting part arranged on a first longitudinal end of the prismatic hollow section and a female connecting part arranged on a second longitudinal end of the prismatic hollow section;
- a number of elongate separators for separating bundles of hollow fiber elements, which elongate separators are arranged with a first end on the outer wall of the prismatic hollow section extending in radial direction
**characterized in that**
each elongate separator comprises a first channel having an elongate bottom wall, a first upstanding wall arranged along a first elongate edge of the bottom wall and a second upstanding wall arranged along a second elongate edge of the bottom wall, wherein both the first and second upstanding wall extend substantially parallel to the radial plane of the prismatic hollow section; and
wherein for each elongate separator at least one opening is provided in the prismatic hollow section, which at least one opening debouches into the first channel.

2. Modular membrane holder according to claim 1,
wherein each elongate separator comprises a second channel having an elongate bottom wall, a first upstanding wall arranged along a first elongate edge of the bottom wall and a second upstanding wall arranged along a second elongate edge of the bottom wall, wherein both the first and second upstanding wall extend substantially parallel to the radial plane of the prismatic hollow section;
wherein the bottom wall of the second channel is arranged against the bottom wall of the first channel; and
wherein for each elongate separator at least one opening is provided in the prismatic hollow section, which at least one opening debouches into the second channel.

3. Modular membrane holder according to claim 1 or 2, wherein for each separator the height of the first upstanding wall, or the combined height of the first upstanding walls, along the length of said wall(s) corresponds to the length of the prismatic hollow section, and wherein the height of the second upstanding wall, or the combined height of the second upstanding walls, along a first section beginning at the first end of the separator corresponds to the length of the prismatic hollow section and along a second section is smaller than the length of the prismatic hollow section.

4. Modular membrane holder according to any of the preceding claims, wherein each membrane holder module is connected directly to an adjacent membrane holder module.

5. Modular membrane holder according to any of the preceding claims, wherein the outer dimensions of the male connecting part of the connecting means corresponds to the inner dimensions of the female connecting part.

6. Modular membrane holder according to any of the preceding claims, wherein each membrane holder module comprises a number of elongate bridging parts each extending between and detachably mounted to the distal ends of two adjacent separators.

7. Modular membrane holder according to any of the preceding claims, further comprising an inlet module connected to the connecting means of the first of the successively interconnected membrane holder modules, and an outlet module connected to the connecting means of the last of the successively interconnected membrane holder modules.
